# EUROPÄISCHE PATENTANMELDUNG

(11) **EP 1 759 798 A1**
(43) Veröffentlichungstag der Anmeldung: **07.03.2007**
(21) Anmeldenummer: 06015753.4
(22) Anmeldetag: 28.07.2006
(51) Int. Cl.: B23K 1/00, B23K 1/008, B23K 3/06, B23K 3/08, B21D 53/86, B23K 101/14

(54) **Anlage zum Herstellen von gelöteten Bauteilen mit einem Durchlauflötofen und einer Katalysatoreinrichtung**

(30) Priorität: 02.09.2005 DE 102005041817
(71) Anmelder: Behr GmbH & Co. KG, 70469 Stuttgart (DE)
(72) Erfinder: Förster, Klaus Dieter, 71640 Ludwigsburg (DE); Jenseit, Andreas, 70825 Korntal-Münchingen (DE); Jilg, Rüdiger, 71546 Aspach (DE)
(74) Vertreter: Mantel, Berthold Friedrich

(57) **Zusammenfassung**

Die Erfindung betrifft eine Anlage zum Herstellen von gelöteten Bauteilen, insbesondere von Wärmeübertragern, aus Leichtmetall, insbesondere aus Aluminium-Werkstoffen, Aluminiumlegierungen oder Knetlegierungen, mit einem Durchlauflötofen (1), der eine Muffel, die mit Schutzgas gespült wird, und einen Innenraum (4) umfasst.

Um die Herstellung von gelöteten Bauteilen zu vereinfachen, steht der Innenraum (4) über eine Verbindungsleitung (12,18) mit einer Katalysatoreinrichtung (15) in Verbindung, die dazu dient, in dem Innenraum (4) des Durchlauflötofens (1) eine sauerstoffarme Atmosphäre zu schaffen.

## Beschreibung

Die Erfindung betrifft eine Anlage zum Herstellen von gelöteten Bauteilen, insbesondere von Wärmeübertragern, aus Leichtmetall, insbesondere aus Aluminium-Werkstoffen, Aluminiumlegierungen oder Knetlegierungen, mit einem Durchlauflötofen, der eine Muffel, die mit Schutzgas gespült wird, und einen Innenraum umfasst.

Beim Löten von Aluminium können Flussmittel verwendet werden, um die Lötstellen zu reinigen. Das Aufbringen des Flussmittels ist aufwendig und kostenintensiv. Darüber hinaus sind die Bauteile nach dem Löten mit Flussmittel beaufschlagt, was insbesondere bei der Verwendung von chloridischen Flussmitteln einen aufwendigen Reinigungsvorgang impliziert. Es ist auch möglich, Aluminium flussmittelfrei unter Vakuum zu verlöten. Zum Löten unter Vakuum sind jedoch technisch aufwendige und somit teure Lötanlagen erforderlich. Die zu verlötenden Teile müssen absolut sauber sein, was nur durch eine kostenintensive Vorbehandlung zu gewährleisten ist.

Aufgabe der Erfindung ist es, eine Anlage zu schaffen, durch welche die Herstellung von gelöteten Bauteilen, insbesondere von Wärmeübertragern, aus Leichtmetall, insbesondere aus Aluminium-Werkstoffen, Aluminiumlegierungen oder Knetlegierungen, mit einem Durchlauflötofen, der eine Muffel, die mit Schutzgas gespült wird, und einen Innenraum umfasst, vereinfacht wird.

Die Aufgabe ist bei einer Anlage zum Herstellen von gelöteten Bauteilen, insbesondere von Wärmeübertragem, aus Leichtmetall, insbesondere aus Aluminium-Werkstoffen, Aluminiumlegierungen oder Knetlegierungen, mit einem Durchlauflötofen, der eine Muffel, die mit Schutzgas gespült wird, und einen Innenraum umfasst, dadurch gelöst, dass der Innenraum über eine Verbindungsleitung mit einer Katalysatoreinrichtung in Verbindung steht, die dazu dient, in dem Innenräum des Durchlauflötofens eine sauerstoffarme Atmosphäre zu schaffen. Die sauerstoffarme Atmosphäre im Innenraum des Durchlauflötofens liefert den Vorteil, dass auf einen Zusatz von Flussmitteln verzichtet werden kann. Bei dem Schutzgas, mit dem die Muffel gespült wird, handelt es sich beispielsweise um Stickstoff.

Ein bevorzugtes Ausführungsbeispiel der Anlage ist dadurch gekennzeichnet, dass die Katalysatoreinrichtung mindestens einen Getterwerkstoff umfasst. Der Getterwerkstoff dient dazu, den Sauerstoff aus dem Innenraum des Durchlauflötofens zu binden, indem der Sauerstoff zum Beispiel mit dem Getterwerkstoff oxidiert. Gemäß einem wesentlichen Aspekt der Erfindung erfolgt das Gettern außerhalb der eigentlichen Ofenmuffel.

Ein weiteres bevorzugtes Ausführungsbeispiel der Anlage ist dadurch gekennzeichnet, dass der Getterwerkstoff Grafit umfasst. Anstelle von Grafit können auch andere Getterwerkstoffe verwendet werden.

Ein weiteres bevorzugtes Ausführungsbeispiel der Anlage ist dadurch gekennzeichnet, dass die Katalysatoreinrichtung eine Reaktionskammer mit einem Reaktionsfilter umfasst. Vorzugsweise umfasst die Katalysatoreinrichtung außerhalb der Reaktionskammer weitere Reaktionsfilter.

Ein weiteres bevorzugtes Ausführungsbeispiel der Anlage ist dadurch gekennzeichnet, dass die Katalysatoreinrichtung eine Heizeinrichtung aufweist. Die Heizeinrichtung dient dazu, die Atmosphäre im Innenraum des Durchlauflötofens auf eine gewünschte Temperatur aufzuheizen.

Ein weiteres bevorzugtes Ausführungsbeispiel der Anlage ist dadurch gekennzeichnet, dass die Heizeinrichtung so ausgelegt und geregelt ist, dass die sauerstoffarme Atmosphäre eine Temperatur von 600 bis 900 Grad Celsius aufweist. Dieser Temperaturbereich gewährleistet eine qualitativ hochwertige Verlötung.

Ein weiteres bevorzugtes Ausführungsbeispiel der Anlage ist dadurch gekennzeichnet, dass die Katalysatoreinrichtung eine Ventilatoreinrichtung aufweist. Vorzugsweise ist die Ventilatoreinrichtung in Reihe zu der Heizeinrichtung geschaltet.

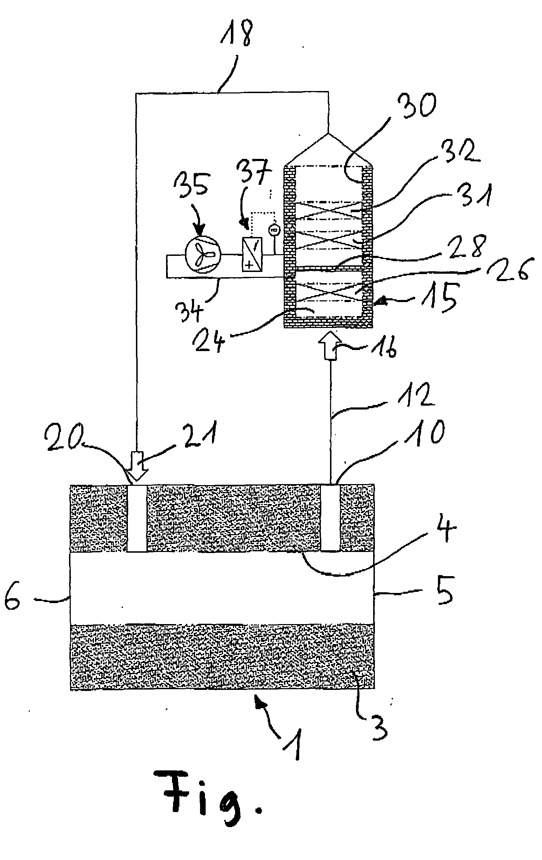

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

In der beiliegenden Figur ist eine erfindungsgemäße Anlage zum Herstellen von gelöteten Bauteilen schematisch dargestellt.

Die in der beiliegenden Figur dargestellte Anlage zum Herstellen von gelöteten Bauteilen umfasst einen Durchlauflötofen 1 mit einem Gehäuse 3 und einem Innenraum 4. Das Gehäuse 3 weist einen Eingang 5 und einen Ausgang 6 für die Bauteile auf. Außerdem weist das Gehäuse 3 eine Austrittsöffnung 10 auf, an die ein Ende einer Verbindungsleitung 12 angeschlossen. Das andere Ende der Verbindungsleitung 12 ist an eine Katalysatoreinrichtung 15 angeschlossen, wie durch einen Pfeil 16 angedeutet ist. Die Katalysatoreinrichtung 15 dient dazu, in dem Innenraum 4 des Durchlauflötofens 1 eine sauerstoffarme Atmosphäre zu schaffen. Aus diesem Grund wird die Katalysatoreinrichtung 15 noch als Oxidiser bezeichnet. An die Katalysatoreinrichtung 15 ist ein Ende einer weiteren Verbindungsleitung 18 angeschlossen. Das andere Ende der weiteren Verbindungsleitungsleitung 18 ist an eine Eintrittsöffnung 20 des Gehäuses 3 angeschlossen, wie durch einen Pfeil 21 angedeutet ist.

Die Katalysatoreinrichtung 15 umfasst eine Reaktionskammer 24, die auch als Brennkammer bezeichnet wird. In der Reaktionskammer 24 ist ein erster Reaktionsfilter 26 angeordnet. Die Reaktionskammer 24 wird durch eine Grafitplatte 28 begrenzt. Außerhalb der Reaktionskammer 24 sind in einer weiteren Reaktionskammer 30 zwei weitere Reaktionsfilter 31, 32 angeordnet. Die erste Reaktionskammer 24 steht über eine Verbindungsleitung 34, in der eine Ventilatoreinrichtung 35 und eine Heizeinrichtung 37 vorgesehen ist, mit der zweiten Reaktionskammer 30 in Verbindung.

Die Atmosphäre in dem Innenraum 4 des Durchlauflötofens 1 wird in der Katalysatoreinrichtung 15 sauerstoffarm gemacht, wie durch die Pfeile 16 und 21 angedeutet ist. Dabei kann dem Durchlauflötofen 1 weiterhin Stickstoff als Schutzgas zugeführt werden. Ein wesentlicher Aspekt der vorliegenden Erfindung ist darin zu sehen, dass das so genannte Gettern außerhalb der eigentlichen Ofenmuffel erfolgt. Außer dem Reduzieren von zum Beispiel Sauerstoff gibt es je nach Art des Getterwerkstoffs und der Temperatur die Möglichkeit der Erzeugung von diversen Reduziergasen, wie zum Beispiel Wasserstoff oder Kohlenmonoxid. Vorteilhafterweise kann, aber muss nicht, vollständig auf den Einsatz von Flussmitteln verzichtet werden. Die Absaugung der Ofenatmosphäre und die Einbringung der gereinigten und dotierten Atmosphäre können im ganzen Bereich der Muffel erfolgen.

Durch die erfindungsgemäße Anlage können die Kosten des Flussmittels eingespart werden. Demzufolge können die Einrichtungs- und Betriebskosten für eine Befluxungseinrichtung ebenfalls eingespart werden. Damit sind Einsparungen bei der Abfallversorgung verbunden. Da kein Flussmittel verwendet wird, kann das Trocknen und Erhitzen der Bauteile nach der Befluxung entfallen. Dadurch kann der Energieaufwand erheblich reduziert werden. Die Einrichtungs- und Betriebskosten eines zusätzlichen Trockenofens können entfallen. Darüber hinaus benötigt die erfindungsgemäße Anlage weniger Platz als herkömmliche Anlagen. Die Staub- und Umweltbelastung kann ebenfalls reduziert werden.

## Patentansprüche

1. Anlage zum Herstellen von gelöteten Bauteilen, insbesondere von Wärmeübertragern, aus Leichtmetall, insbesondere aus Aluminium-Werkstoffen, Aluminiumlegierungen oder Knetlegierungen, mit einem Durchlauflötofen (1), der eine Muffel, die mit Schutzgas gespült wird, und einen Innenraum (4) umfasst, **dadurch gekennzeichnet, dass** der Innenraum (4) über eine Verbindungsleitung (12,18) mit einer Katalysatoreinrichtung (15) in Verbindung steht, die dazu dient, in dem Innenraum (4) des Durchlauflötofens (1) eine sauerstoffarme Atmosphäre zu schaffen.

2. Anlage nach Anspruch 1, **dadurch gekennzeichnet, dass** die Katalysatoreinrichtung (15) mindestens einen Getterwerkstoff (28) umfasst.

3. Anlage nach Anspruch 2, **dadurch gekennzeichnet, dass** der Getterwerkstoff (28) Grafit umfasst.

4. Anlage nach einem der vorhergehenden Ansprüche, **dadurch gekennzeichnet, dass** die Katalysatoreinrichtung (15) eine Reaktionskammer (24) mit einem Reaktionsfilter (26) umfasst.

5. Anlage nach einem der vorhergehenden Ansprüche, **dadurch gekennzeichnet, dass** die Katalysatoreinrichtung (15) eine Heizeinrichtung (37) aufweist.

6. Anlage nach Anspruch 5, **dadurch gekennzeichnet, dass** die Heizeinrichtung (37) so ausgelegt und eingestellt ist, dass die sauerstoffarme Atmosphäre eine Temperatur von 600 bis 900 Grad Celsius aufweist.

7. Anlage nach einem der vorhergehenden Ansprüche, **dadurch gekennzeichnet, dass** die Katalysatoreinrichtung (15) eine Ventilatoreinrichtung (35) aufweist.
